# EUROPEAN PATENT SPECIFICATION

(11) **EP 1 497 602 B1**
(45) Date of publication and mention of the grant of the patent: **25.04.2018**
(21) Application number: 03743760.5
(22) Date of filing: 12.03.2003
(51) Int. Cl.: F27D 21/04, C21C 5/46, C21C 5/44, C21B 7/24, C21B 7/06, F27D 3/15, F27D 21/00, C21C 5/52, F27D 3/16, F27D 19/00

(54) **CONTROL OF REFRACTORY WEAR**
STEUERUNG DES VERSCHLEISSES VON FEUERFESTEM MATERIAL
SUIVI DE L'USURE D'UN REFRACTAIRE

(30) Priority: 12.03.2002 AU PS102702; 26.06.2002 AU PS319202
(43) Date of publication of application: 19.01.2005
(73) Proprietor: XSTRATA Queensland Limited, Brisbane, QLD 4000 (AU)
(72) Inventor: EDWARDS, James, Scott, Melbourne ,Victoria 3001 (AU); TUPPURAINEN, Jorma, Maribyrnong,Victoria 3032 (AU)
(74) Representative: Murgitroyd & Company
(86) International application number: PCT/AU2003/000295
(87) International publication number: WO 2003/076858

(56) References cited:
- DE-A- 3 526 391
- DATABASE WPI Section Ch, Week 198536 Derwent Publications Ltd., London, GB; Class L02, AN 1985-220450 XP002362556 -& JP 60 141813 A (NIPPON STEEL CORP) 26 July 1985 (1985-07-26) -& PATENT ABSTRACTS OF JAPAN vol. 009, no. 306 (C-317), 3 December 1985 (1985-12-03) & JP 60 141813 A (SHIN NIPPON SEITETSU KK), 26 July 1985 (1985-07-26)
- PATENT ABSTRACTS OF JAPAN vol. 2000, no. 02, 29 February 2000 (2000-02-29) & JP 11 316188 A (ZEXEL:KK), 16 November 1999 (1999-11-16)
- PATENT ABSTRACTS OF JAPAN vol. 1997, no. 07, 31 July 1997 (1997-07-31) & JP 09 059703 A (SUMITOMO METAL IND LTD), 4 March 1997 (1997-03-04)
- DATABASE WPI Week 200005, Derwent Publications Ltd., London, GB; Class L02, AN 2000-058755, XP002998330 & JP 11 316 118 A (NIPPON STEEL CORP) 16 November 1999
- DATABASE WPI Week 198536, Derwent Publications Ltd., London, GB; Class L02, AN 1985-220450, XP002998331 & JP 60 141 813 A (NIPPON STEEL CORP) 26 July 1985
- DATABASE WPI Week 198904, Derwent Publications Ltd., London, GB; Class Q77, AN 1989-030503, XP002998332 & SU 1 406 445 A (CHELY METAL WKS) 30 June 1988
- DATABASE WPI Week 198627, Derwent Publications Ltd., London, GB; Class Q77, AN 1986-175574, XP002998333 & SU 1 196 662 A (URALTSVETMETREMONT) 07 December 1985
- DATABASE WPI Week 198801, Derwent Publications Ltd., London, GB; Class M24, AN 1988-005272, XP002998334 & SU 1 310 433 A (ZAPORO METAL COMBIN) 15 May 1987
- DATABASE WPI Week 199803, Derwent Publications Ltd., London, GB; Class M24, AN 1998-028211, XP002998335 & JP 9 287 009 A (NIPPON STEEL CORP) 04 November 1997

## Description

### FIELD OF THE INVENTION

The present invention relates to refractory linings and refractory walls used to contain a melt in the production of iron and non-ferrous metals.

### BACKGROUND OF THE INVENTION

Any discussion of the prior art throughout the specification should in no way be considered as an admission that such prior art is widely known or forms part of common general knowledge in the field.

Refractory linings and walls are used in the production of iron, steel and non-ferrous metals. The purpose of the refractory lining or walls is to contain "a melt" within a furnace. The melt may include molten metal, oxides, slag and molten sulphides. The furnace is typically a steel shell lined with refractory material. Refractories are typically high melting point crystalline solids, carbides, carbon or graphite that have been engineered to withstand the high temperatures and the corrosive environments within the furnace and contain the melt.

While refractory materials have a good corrosion resistance, the extreme environment within a furnace will eventually cause the refractory to wear out. The operative lifetime of the refractory is referred to as a "campaign". The replacement of refractory represents a significant cost as the refractory material is expensive, the installation is difficult and there is lost production while the furnace is out of operation. In light of this, there is an ongoing effort to extend the campaign life of the refractory through the development of new refractory materials that offer improved performance with reduced wear rates or lower installation times.

The refractory wear rate decreases with decreasing temperature within the furnace. However, in order to tap the melt from the furnace at an adequate flow rate, the melt must be maintained at a temperature that is greater than its freezing point to keep it sufficiently fluid.

The freezing point temperature of the melt is dependent on the particular composition of the melt. For a known melt composition, the freezing point is also known from calculation, experiment or plant experience. Therefore it is possible to determine the minimum temperature at which the viscosity of the melt is low enough (or conversely, the fluidity is high enough) to provide the desired tapping flow rate. By keeping the furnace temperature as close as possible to the minimum, the corrosion of the refractory is minimised thereby extending the campaign of the lining.

Unfortunately, the composition of the melt within the furnace will vary over time and hence the freezing point is likewise subject to variation. In order to account for this, the furnace is operated to maintain the melt at a temperature set point calculated such that an adequate tapping rate will be maintained if the freezing point is at the upper limit of the typical deviations from the theoretical freezing point. Therefore, the melt temperature is usually higher than it needs to be for most of the time during the operation of the furnace. As a result, the refractory wear rate is greater than it needs to be, thereby reducing the campaign to less than the theoretically ideal campaign for that lining.

JP 60141813 discloses an approach where the residual thickness of a refractory wall of a converter is detected on the basis of measuring the change in temperature at a point in the refractories between when the vessel is full, and when the vessel is empty.

It is an object of the present invention to overcome or ameliorate at least one of the disadvantages of the prior art, or to provide a useful alternative.

### SUMMARY OF THE INVENTION

According to a first aspect, the present invention provides a refractory wear control assembly for installation in a refractory furnace, the assembly including:
a refractory sensor for measuring the temperature of the refractory;
a viscosity sensor for determining the viscosity of the melt in the furnace;
melt temperature adjustment means responsive to the refractory sensor and the viscosity sensor, such that,
the adjustment means adjusts the melt temperature to an optimum set point temperature determined from a predefined relationship between the refractory temperature and the melt viscosity, wherein the optimum set point temperature is a minimum temperature that will sustain a desired rate of tapping the melt from the furnace.

According to a second aspect, the present invention provides a method of controlling refractory wear rates within a refractory furnace, the method including:
measuring the temperature of the refractory layer;
measuring the viscosity of a melt within the furnace;
adjusting the melt temperature to an optimum set point temperature determined from a predefined relationship between the temperature of the refractory and the viscosity of the melt; wherein,
the optimum set point temperature is a minimum temperature that will sustain a desired rate at which the melt is tapped from the furnace.

Preferably, the viscosity of the melt is determined using a measurement of the flow rate as it is tapped from the furnace.

In another preferred form, the refractory temperature and the tapping flow rate are continuously monitored. This provides real time adjustment of the optimum set point temperature. However, it will be appreciated that the refractory temperature and the tapping flow rate may be periodically monitored to provide periodically calculated optimum set point temperatures which are then compared to periodically measured melt temperatures.

Preferably, the refractory temperature is measured in a high wear area of the furnace. In a particularly preferred form, the melt temperature sensor is at least one thermocouple is used for continuously measuring the temperature of the melt and the refractory sensor is at least one other thermocouple is used for continuously monitoring the refractory temperature.

Preferably, the rate of change of the refractory temperature is compared to a theoretically calculated ideal rate of change in the refractory temperature based on the theoretical minimum possible refractory wear rate for the particular operating conditions of the furnace, whereby the comparison between the actual rate of change in the refractory temperature and the monitored value of the melt viscosity against the theoretically ideal rate of change in refractory temperature and the melt viscosity is used to determine the adjustment required in the melt temperature.

Preferably, the theoretically ideal rate of change in the refractory temperature is calculated from the expected wear rate of a refractory lining that maintains an ideal accretion layer on its internal surface. It will be appreciated by those skilled in this field of technology, that the ideal accretion layer will vary in thickness depending on the particular melt. In some cases, the ideal situation is not to have an accretion layer at all.

In another embodiment of the invention, the height of the melt within the furnace is measured during tapping using an air-cooled lance whereby the rate of change of the height of the melt is used to determine the tapping flow rate and thereby determine the melt viscosity. In some embodiments, the refractory temperature, and/or the melt temperature, is measured using an optical pyrometer. In a further preferred form, forced cooling is applied to the refractory in order to further retard the refractory wear rate.

In some embodiments, the melt viscosity is measured using an inclined slope viscometer. In another preferred form, a relationship between viscosity and temperature of the melt is derived from an analysis of the feed prior to entering the furnace. Alternatively, a relationship between viscosity and temperature of the melt is derived from an analysis of the melt. The freezing point of the melt may also be estimated using these techniques.

Using the present invention, the melt temperature is continually adjusted to an actual minimum value above the freezing point that will provide a melt viscosity suitable for the desired tapping rate. By keeping the melt temperature to a minimum, the refractory wear rate is likewise kept to a minimum, which in turn extends the campaign of the refractory lining.

### BRIEF DESCRIPTION OF THE DRAWINGS

Preferred embodiments of the present invention will now be described by way of example only, with reference to the accompanying drawings, in which:
Figure 1 shows a vertical section through a refractory furnace suitable for use with the present invention;
Figure 2 is section A-A of the refractory furnace shown in Figure 1; and
Figure 3 is a graphical comparison of actual refractory wear rates taken from subsequent refractory campaigns in the same furnace, the furnace being operated in accordance with prior art techniques during the first campaign, and in accordance with the present invention during the second campaign.

### DETAILED DESCRIPTION OF THE PREFERRED EMBODIMENTS

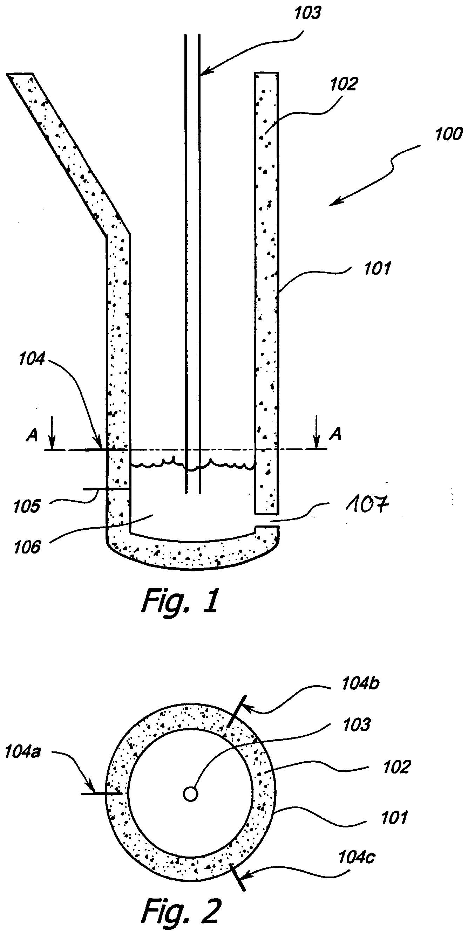

Referring to Figure 1, the refractory furnace 100 consists of a steel casing 101 enclosing a refractory lining 102. The temperature of the melt 106 is measured using the thermocouple 105 which extends from the casing 101 to the interior of the furnace in order to "see" the melt 106

The temperature of the refractory layer 102 is monitored using the "in-brick" thermocouples such as those shown at locations 104a, b and c. The in-brick thermocouple are embedded at a set depth within the refractory. The temperature sensors used are generally type N thermocouples, however, other thermocouple types and optical pyrometers may also be used. The in-brick thermocouple is carefully positioned as the distance from the exterior surface influences the heat transfer calculations for the material.

The melt is tapped from the furnace 100 through the tapping block 107. An air-cooled lance 103 lowered into the furnace is used to measure the tapping rate. Using the flow rate of the melt as it is tapped from the furnace, it is possible to estimate the relative viscosity of the melt. By monitoring the refractory temperature and combining this with a measure of the melt viscosity, the present invention allows the system to continuously provide real time control of refractory wear rates. Traditionally, the thickness of the refractory layer was measured every month or so using a manual method. However, a monthly measurement of the refractory thickness (also known as the "brick length") is inferior to real time control.

Real time control of the refractory wear rate allows the campaign of the refractory lining to be maximised without the use of forced cooling systems for the refractory.

The invention uses the relationship between the tapping rate and the freezing point of the melt to keep the furnace temperature at a minimum. It is known in the industry that the refractory wear rate increases when the furnace temperature is higher. However, in order to ensure that the melt can be tapped from the furnace at a sufficient flow rate, the melt needs to have a sufficiently high fluidity (or conversely, a sufficiently low viscosity).

Given the theoretical composition of the melt, it is possible to determine the theoretical freezing point and the theoretically ideal set point temperature which is the minimum temperature at which the melt has sufficiently low viscosity.

In reality, the composition of the melt is constantly varying and therefore the freezing temperature of the melt also varies. Therefore, it has been common practice in the industry to maintain the melt at a set point temperature that is higher than it needs to be in order to take into account the fluctuations in melt composition. This practice reduces the campaign of the refractory which increases production costs as discussed above in the Background of the Invention.

The present invention has provided the ability to monitor the refractory wear by measuring the refractory temperature and the rate of change of the refractory temperature then comparing these values to theoretically optimum values for minimum refractory wear calculated using the known heat transfer characteristics of the material. By combining this information with the melt viscosity data calculated from the tapping flow rate, it is possible to continuously adjust the melt temperature to an optimum set point temperature. The optimum set point temperature is the actual minimum temperature at which the melt viscosity is low enough for an effective tapping rate. Therefore the temperature in the furnace is continually at the actual minimum thereby reducing refractory wear rate and extending the campaign of the refractory lining.

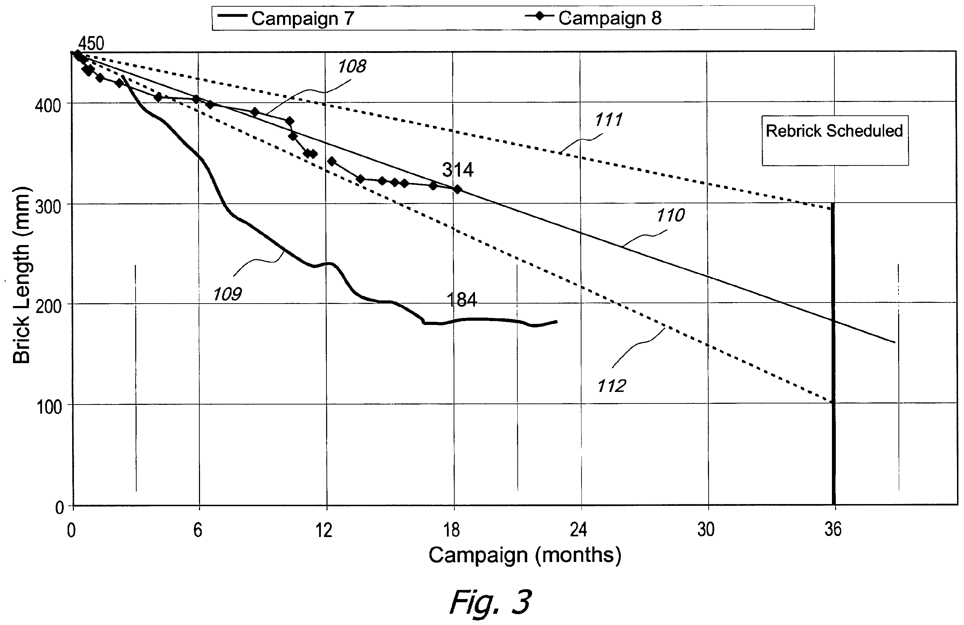

Figure 3 shows a comparison between the actual refractory wear rates from subsequent campaigns in the same furnace. The brick length is a measurement of the refractory thickness and the campaign is measured in months. During campaign no. 7 the furnace was operated in accordance with the techniques discussed in the Background of the Invention. The plot of the refractory wear during campaign no. 7 is shown along line 109.

During campaign no. 8, the furnace was operated in accordance with the present invention and the plot of refractory wear against time is shown along line 108. Line 110 is the statistically calculated trend line for refractory wear during campaign no. 8 calculated at 79.3 weeks into the campaign. The trend line indicates that the average wear rate during campaign no. 8 will be 1.7 mm per week.

In contrast, the refractory wear during campaign no. 7 was roughly double that of campaign no. 8. At equivalent times during campaigns nos. 7 and 8 (79.3 weeks), the brick length during campaign no. 7 was 184 mm while in campaign no. 8 it is 314 mm. As a further reference, dotted line 111 shows a wear rate of 1 mm per week and dotted line 112 shows a wear rate of 2.24 mm per week.

The data presented in Figure 3 confirms that the present invention provides an effective method of reducing refractory wear and increasing refractory campaigns. The relatively close alignment between the actual wear rate 108 during campaign no. 8 and the statistical trend line 110 is a further indication of the degree of control the present invention provides over wear rates and the increased accuracy of the predicted campaign.

## Claims

1. A refractory wear control assembly for installation in a refractory furnace (100), the assembly including:
a refractory sensor for measuring the temperature of the refractory;
a viscosity sensor for determining the viscosity of the melt (106) in the furnace (100);
melt temperature adjustment means responsive to the refractory sensor and the viscosity sensor, such that,
the adjustment means adjusts the melt temperature to an optimum set point temperature determined from a predefined relationship between the refractory temperature and the melt viscosity, wherein the optimum set point temperature is a minimum temperature that will sustain a desired rate of tapping the melt (106) from the furnace (100).

2. An assembly according to claim 1,
wherein the melt temperature adjustment means includes a melt temperature sensor for monitoring the temperature of the melt (106) and the viscosity sensor has a tapping flow rate sensor, wherein the viscosity of the melt (106) is determined using the tapping flow rate measurement.

3. An assembly according to claim 2,
wherein the refractory temperature and the tapping flow rate are continuously monitored.

4. An assembly according to any one of claims 1 to 3,
wherein the refractory temperature is measured in a high wear area of the furnace (100).

5. An assembly according to any one of claims 1 to 4,
wherein the melt temperature sensor has at least one thermocouple for continuously measuring the temperature of the melt (106) and the refractory sensor has at least one other thermocouple for continuously monitoring the refractory temperature.

6. An assembly according to any one of claims 1 to 5,
further comprising means for comparing the rate of change of the refractory temperature to a theoretically calculated ideal rate of change in the refractory temperature based on the theoretical minimum possible refractory wear rate for the particular operating conditions of the furnace (100),
whereby the comparison between the actual rate of change in the refractory temperature and the monitored value of the melt viscosity against the theoretically ideal rate of change in refractory temperature and the melt viscosity is used to determine the adjustment required in the melt temperature.

7. An assembly according to any one of claims 1 to 6,
further comprising means for deriving a theoretical relationship between viscosity and temperature of the melt (106) from an analysis of the feed prior to entering the furnace (100).

8. An assembly according to any of claims 1 to 6,
further comprising means for deriving a theoretical relationship between viscosity and temperature of the melt (106) from an analysis of the melt (106).

9. An assembly according to claim 6,
further comprising means for calculating the theoretically ideal rate of change in the refractory temperature from the expected wear rate of a refractory lining that maintains an ideal accretion layer on its internal surface.

10. An assembly according to any one of claims 1 to 9,
further comprising means for measuring the height of the melt (106) within the furnace (100) during tapping using an air-cooled lance and means for using the rate of change of the height of the melt (106) to determine the tapping flow rate and thereby determine the melt viscosity.

11. A method of controlling refractory wear rates within a refractory furnace (100), the method including:
measuring the temperature of the refractory layer;
measuring the viscosity of a melt (106) within the furnace (100);
adjusting the melt temperature to an optimum set point temperature determined from a predefined relationship between the temperature of the refractory and the viscosity of the melt (106); wherein,
the optimum set point temperature is a minimum temperature that will sustain a desired rate at which the melt (106) is tapped from the furnace (100).

12. A method according to claim 11,
wherein the viscosity of the melt (106) is determined using a measurement of the flow rate of melt (106) as it is tapped from the furnace (100).

13. A method according to claim 12,
wherein the refractory temperature and the tapping flow rate are continuously monitored.

14. A method according to any one of claims 11 to 13,
wherein the refractory temperature is measured in a high wear area
of the furnace (100).

15. A method according to any one of claims 11 to 14,
wherein the rate of change of the refractory temperature is compared to a theoretically calculated ideal rate of change in the refractory temperature based on the theoretical minimum possible refractory wear rate for the particular operating conditions of the furnace (100),
whereby the comparison between the actual rate of change in the refractory temperature and the monitored value of the melt viscosity against the theoretically ideal rate of change in refractory temperature and the melt viscosity is used to determine the adjustment required in the melt temperature.

16. A method according to any one of claims 11 to 15,
wherein a theoretical relationship between viscosity and temperature of the melt (106) is derived from an analysis of the feed prior to entering the furnace (100).

17. A method according to any one of claims 11 to 15,
wherein a theoretical relationship between viscosity and temperature of the melt (106) is derived from an analysis of the melt (106).

18. A method according to claim 15,
wherein the theoretically ideal rate of change in the refractory temperature is calculated from the expected wear rate of a refractory lining that maintains an ideal accretion layer on its internal surface.

19. A method according to any one of claims 11 to 18,
wherein the height of the melt (106) within the furnace (100) is measured during tapping using an air-cooled lance whereby the rate of change of the height of the melt (106) is used to determine the tapping flow rate and thereby determine the melt viscosity.

20. An assembly according to claim 1,
further comprising an optical pyrometer for measuring the refractory temperature and/or the melt temperature.

21. An assembly according to claim 1,
further comprising an inclined slope viscometer for measuring the melt viscosity.

22. An assembly according to any one of the claims 1 to 10, 20 or 21,
further comprising forced cooling means for applying forced cooling to the refractory in order to further retard the refractory wear rate.

23. An assembly according to claim 2,
wherein the refractory temperature and the tapping flow rate are periodically monitored to provide periodically calculated optimum set point temperatures which are then compared to periodically measured melt temperatures.

24. A method according to claim 11,
wherein the refractory temperature, and/or the melt temperature, is measured using an optical pyrometer.

25. A method according to claim 11,
wherein the melt viscosity is measured using an inclined slope viscometer.

26. A method according to any one of claims 11 to 21,
wherein forced cooling is applied to the refractory in order to further retard the refractory wear rate.

27. A method according to claim 12,
wherein the refractory temperature and the tapping flow rate are periodically monitored to provide periodically calculated optimum set point temperatures which are then compared to periodically measured melt temperatures.

## Patentansprüche

1. Eine Feuerfestmaterial-Verschleißkontrollanordnung für den Einbau in einem feuerfesten Ofen (100), wobei die Anordnung Folgendes umfasst:
einen Feuerfestmaterialsensor zum Messen der Temperatur des Feuerfestmaterials;
einen Viskositätssensor zum Bestimmen der Viskosität der Schmelze (106) in dem Ofen (100);
ein Schmelzetemperatur-Einstellmittel, das auf den Feuerfestmaterialsensor und den Viskositätssensor anspricht, sodass
das Einstellmittel die Schmelzetemperatur auf eine aus einer im Voraus definierten Beziehung zwischen der Feuerfestmaterialtemperatur und der Schmelzeviskosität bestimmte optimale Solltemperatur einstellt, wobei es sich bei der optimalen Solltemperatur um eine minimale Temperatur handelt, die eine gewünschte Geschwindigkeit des Ablassens der Schmelze (106) aus dem Ofen (100) aufrechterhält.

2. Anordnung gemäß Anspruch 1,
wobei das Schmelzetemperatur-Einstellmittel einen Schmelzetemperatursensor zum Überwachen der Temperatur der Schmelze (106) umfasst und der Viskositätssensor einen Ablass-Fließgeschwindigkeitssensor aufweist, wobei die Viskosität der Schmelze (106) unter Verwendung der Ablass-Fließgeschwindigkeitsmessung bestimmt wird.

3. Anordnung gemäß Anspruch 2,
wobei die Feuerfestmaterialtemperatur und die Ablass-Fließgeschwindigkeit kontinuierlich überwacht werden.

4. Anordnung gemäß einem der Ansprüche 1 bis 3,
wobei die Feuerfestmaterialtemperatur in einem Bereich des Ofens (100) mit starkem Verschleiß gemessen wird.

5. Anordnung gemäß einem der Ansprüche 1 bis 4,
wobei der Schmelzetemperatursensor mindestens ein Thermoelement zum kontinuierlichen Messen der Temperatur der Schmelze (106) aufweist und der Feuerfestmaterialsensor mindestens ein anderes Thermoelement zum kontinuierlichen Überwachen der Feuerfestmaterialtemperatur aufweist.

6. Anordnung gemäß einem der Ansprüche 1 bis 5,
weiter beinhaltend ein Mittel zum Vergleichen der Änderungsgeschwindigkeit der Feuerfestmaterialtemperatur mit einer theoretisch berechneten idealen Änderungsgeschwindigkeit der Feuerfestmaterialtemperatur auf der Basis der theoretischen kleinstmöglichen Feuerfestmaterial-Verschleißgeschwindigkeit für die bestimmten Betriebsbedingungen des Ofens (100),
wobei der Vergleich der Ist-Änderungsgeschwindigkeit der Feuerfestmaterialtemperatur sowie des überwachten Werts der Schmelzeviskosität mit der theoretisch idealen Änderungsgeschwindigkeit der Feuerfestmaterialtemperatur sowie der Schmelzeviskosität zum Bestimmen der erforderlichen Einstellung der Schmelzetemperatur verwendet wird.

7. Anordnung gemäß einem der Ansprüche 1 bis 6,
weiter beinhaltend ein Mittel zum Herleiten einer theoretischen Beziehung zwischen der Viskosität und der Temperatur der Schmelze (106) aus einer Analyse der Beschickung vor dem Eintritt in den Ofen (100).

8. Anordnung gemäß einem der Ansprüche 1 bis 6,
weiter beinhaltend ein Mittel zum Herleiten einer theoretischen Beziehung zwischen der Viskosität und der Temperatur der Schmelze (106) aus einer Analyse der Schmelze (106).

9. Anordnung gemäß Anspruch 6,
weiter beinhaltend ein Mittel zum Berechnen der theoretisch idealen Änderungsgeschwindigkeit der Feuerfestmaterialtemperatur aus der erwarteten Verschleißgeschwindigkeit einer Feuerfestmaterialauskleidung, die eine ideale Zuwachsschicht auf ihrer inneren Oberfläche bewahrt.

10. Anordnung gemäß einem der Ansprüche 1 bis 9,
weiter beinhaltend ein Mittel zum Messen der Höhe der Schmelze (106) in dem Ofen (100) während des Ablassens unter Verwendung einer luftgekühlten Lanze und ein Mittel zum Verwenden der Änderungsgeschwindigkeit der Höhe der Schmelze (106), um die Ablass-Fließgeschwindigkeit zu bestimmen und dadurch die Schmelzeviskosität zu bestimmen.

11. Ein Verfahren zum Kontrollieren von Feuerfestmaterial-Verschleißgeschwindigkeiten in einem feuerfesten Ofen (100), wobei das Verfahren Folgendes umfasst:
Messen der Temperatur der Feuerfestmaterialschicht;
Messen der Viskosität einer Schmelze (106) in dem Ofen (100);
Einstellen der Schmelzetemperatur auf eine aus einer im Voraus definierten Beziehung zwischen der Temperatur des Feuerfestmaterials und der Viskosität der Schmelze (106) bestimmte optimale Solltemperatur; wobei
es sich bei der optimalen Solltemperatur um eine minimale Temperatur handelt, die eine gewünschte Geschwindigkeit, mit der die Schmelze (106) aus dem Ofen (100) abgelassen wird, aufrechterhält.

12. Verfahren gemäß Anspruch 11,
wobei die Viskosität der Schmelze (106) unter Verwendung einer Messung der Fließgeschwindigkeit der Schmelze (106), während sie aus dem Ofen (100) abgelassen wird, bestimmt wird.

13. Verfahren gemäß Anspruch 12,
wobei die Feuerfestmaterialtemperatur und die Ablass-Fließgeschwindigkeit kontinuierlich überwacht werden.

14. Verfahren gemäß einem der Ansprüche 11 bis 13,
wobei die Feuerfestmaterialtemperatur in einem Bereich des Ofens (100) mit starkem Verschleiß gemessen wird.

15. Verfahren gemäß einem der Ansprüche 11 bis 14,
wobei die Änderungsgeschwindigkeit der Feuerfestmaterialtemperatur mit einer theoretisch berechneten idealen Änderungsgeschwindigkeit der Feuerfestmaterialtemperatur auf der Basis der theoretischen kleinstmöglichen Feuerfestmaterial-Verschleißgeschwindigkeit für die speziellen Betriebsbedingungen des Ofens (100) verglichen wird,
wobei der Vergleich der Ist-Änderungsgeschwindigkeit der Feuerfestmaterialtemperatur sowie des überwachten Werts der Schmelzeviskosität mit der theoretisch idealen Änderungsgeschwindigkeit der Feuerfestmaterialtemperatur sowie der Schmelzeviskosität zum Bestimmen der erforderlichen Einstellung der Schmelzetemperatur verwendet wird.

16. Verfahren gemäß einem der Ansprüche 11 bis 15,
wobei eine theoretische Beziehung zwischen der Viskosität und der Temperatur der Schmelze (106) aus einer Analyse der Beschickung vor dem Eintritt in den Ofen (100) hergeleitet wird.

17. Verfahren gemäß einem der Ansprüche 11 bis 15,
wobei eine theoretische Beziehung zwischen der Viskosität und der Temperatur der Schmelze (106) aus einer Analyse der Schmelze (106) hergeleitet wird.

18. Verfahren gemäß Anspruch 15,
wobei die theoretisch ideale Änderungsgeschwindigkeit der Feuerfestmaterialtemperatur aus der erwarteten Verschleißgeschwindigkeit einer Feuerfestmaterialauskleidung, die eine ideale Zuwachsschicht auf ihrer inneren Oberfläche bewahrt, berechnet wird.

19. Verfahren gemäß einem der Ansprüche 11 bis 18,
wobei die Höhe der Schmelze (106) in dem Ofen (100) während des Ablassens unter Verwendung einer luftgekühlten Lanze gemessen wird, wobei die Änderungsgeschwindigkeit der Höhe der Schmelze (106) verwendet wird, um die Ablass-Fließgeschwindigkeit zu bestimmen und dadurch die Schmelzeviskosität zu bestimmen.

20. Anordnung gemäß Anspruch 1,
weiter beinhaltend ein optisches Pyrometer zum Messen der Feuerfestmaterialtemperatur und/oder der Schmelzetemperatur.

21. Anordnung gemäß Anspruch 1,
weiter beinhaltend ein Schrägflächenviskosimeter zum Messen der Schmelzeviskosität.

22. Anordnung gemäß einem der Ansprüche 1 bis 10, 20 oder 21,
weiter beinhaltend ein Zwangskühlungsmittel zum Aufbringen von Zwangskühlung auf das Feuerfestmaterial, um die Feuerfestmaterial-Verschleißgeschwindigkeit weiter zu verlangsamen.

23. Anordnung gemäß Anspruch 2,
wobei die Feuerfestmaterialtemperatur und die Ablass-Fließgeschwindigkeit periodisch überwacht werden, um periodisch berechnete optimale Solltemperaturen bereitzustellen, die dann mit periodisch gemessenen Schmelzetemperaturen verglichen werden.

24. Verfahren gemäß Anspruch 11,
wobei die Feuerfestmaterialtemperatur und/oder die Schmelzetemperatur unter Verwendung eines optischen Pyrometers gemessen wird/werden.

25. Verfahren gemäß Anspruch 11,
wobei die Schmelzeviskosität unter Verwendung eines Schrägflächenviskosimeters gemessen wird.

26. Verfahren gemäß einem der Ansprüche 11 bis 21,
wobei Zwangskühlung auf das Feuerfestmaterial aufgebracht wird, um die Feuerfestmaterial-Verschleißgeschwindigkeit weiter zu verlangsamen.

27. Verfahren gemäß Anspruch 12,
wobei die Feuerfestmaterialtemperatur und die Ablass-Fließgeschwindigkeit periodisch überwacht werden, um periodisch berechnete optimale Solltemperaturen bereitzustellen, die dann mit periodisch gemessenen Schmelzetemperaturen verglichen werden.

## Revendications

1. Un ensemble de contrôle d'usure de réfractaire destiné à être installé dans un four réfractaire (100), l'ensemble incluant :
un capteur de réfractaire pour mesurer la température du réfractaire ;
un capteur de viscosité pour déterminer la viscosité du bain de fusion (106) dans le four (100) ;
un moyen de réglage de température de bain de fusion sensible au capteur de réfractaire et au capteur de viscosité, de telle sorte que,
le moyen de réglage règle la température du bain de fusion à une température de point de consigne optimal déterminée à partir d'une relation prédéfinie entre la température du réfractaire et la viscosité du bain de fusion, la température de point de consigne optimal étant une température minimale qui soutiendra une vitesse souhaitée de coulée du bain de fusion (106) à partir du four (100).

2. Un ensemble selon la revendication 1,
dans lequel le moyen de réglage de température de bain de fusion inclut un capteur de température de bain de fusion pour surveiller la température du bain de fusion (106) et le capteur de viscosité a un capteur de vitesse d'écoulement de la coulée, la viscosité du bain de fusion (106) étant déterminée à l'aide de la mesure de vitesse d'écoulement de la coulée.

3. Un ensemble selon la revendication 2,
dans lequel la température du réfractaire et la vitesse d'écoulement de la coulée sont surveillées de manière continue.

4. Un ensemble selon l'une quelconque des revendications 1 à 3,
dans lequel la température du réfractaire est mesurée dans une zone d'usure élevée du four (100).

5. Un ensemble selon l'une quelconque des revendications 1 à 4,
dans lequel le capteur de température de bain de fusion a au moins un thermocouple pour mesurer de manière continue la température du bain de fusion (106) et le capteur de réfractaire a au moins un autre thermocouple pour surveiller de manière continue la température du réfractaire.

6. Un ensemble selon l'une quelconque des revendications 1 à 5,
comprenant en outre un moyen pour comparer la vitesse de changement de la température du réfractaire à une vitesse théoriquement idéale de changement de la température du réfractaire calculée sur la base du taux d'usure de réfractaire possible minimal théorique pour les conditions de fonctionnement particulières du four (100), grâce à quoi la comparaison entre la vitesse réelle de changement de la température du réfractaire et la valeur surveillée de la viscosité du bain de fusion par rapport à la vitesse théoriquement idéale de changement de la température du réfractaire et à la viscosité du bain de fusion est utilisée pour déterminer le réglage requis de la température du bain de fusion.

7. Un ensemble selon l'une quelconque des revendications 1 à 6,
comprenant en outre un moyen pour dériver une relation théorique entre la viscosité et la température du bain de fusion (106) à partir d'une analyse de la charge avant son entrée dans le four (100).

8. Un ensemble selon n'importe lesquelles des revendications 1 à 6,
comprenant en outre un moyen pour dériver une relation théorique entre la viscosité et la température du bain de fusion (106) à partir d'une analyse du bain de fusion (106).

9. Un ensemble selon la revendication 6,
comprenant en outre un moyen pour calculer la vitesse théoriquement idéale de changement de la température du réfractaire à partir du taux d'usure attendu d'un revêtement réfractaire qui maintient une couche d'accrétion idéale sur sa surface interne.

10. Un ensemble selon l'une quelconque des revendications 1 à 9,
comprenant en outre un moyen pour mesurer la hauteur du bain de fusion (106) à l'intérieur du four (100) pendant la coulée à l'aide d'une lance refroidie par air et un moyen pour utiliser la vitesse de changement de la hauteur du bain de fusion (106) afin de déterminer la vitesse d'écoulement de la coulée et déterminer ainsi la viscosité du bain de fusion.

11. Un procédé de contrôle de taux d'usure de réfractaire à l'intérieur d'un four réfractaire (100), le procédé incluant :
la mesure de la température de la couche réfractaire ;
la mesure de la viscosité d'un bain de fusion (106) à l'intérieur du four (100) ;
le réglage de la température du bain de fusion à une température de point de consigne optimal déterminée à partir d'une relation prédéfinie entre la température du réfractaire et la viscosité du bain de fusion (106) ; dans lequel,
la température de point de consigne optimal est une température minimale qui soutiendra une vitesse souhaitée à laquelle le bain de fusion (106) est coulé à partir du four (100).

12. Un procédé selon la revendication 11,
dans lequel la viscosité du bain de fusion (106) est déterminée à l'aide d'une mesure de la vitesse d'écoulement du bain de fusion (106) au fur et à mesure qu'il est coulé à partir du four (100).

13. Un procédé selon la revendication 12,
dans lequel la température du réfractaire et la vitesse d'écoulement de la coulée sont surveillées de manière continue.

14. Un procédé selon l'une quelconque des revendications 11 à 13,
dans lequel la température du réfractaire est mesurée dans une zone d'usure élevée du four (100).

15. Un procédé selon l'une quelconque des revendications 11 à 14,
dans lequel la vitesse de changement de la température du réfractaire est comparée à une vitesse théoriquement idéale de changement de la température du réfractaire calculée sur la base du taux d'usure de réfractaire possible minimal théorique pour les conditions de fonctionnement particulières du four (100),
grâce à quoi la comparaison entre la vitesse réelle de changement de la température du réfractaire et la valeur surveillée de la viscosité du bain de fusion par rapport à la vitesse théoriquement idéale de changement de la température du réfractaire et à la viscosité du bain de fusion est utilisée pour déterminer le réglage requis de la température du bain de fusion.

16. Un procédé selon l'une quelconque des revendications 11 à 15,
dans lequel une relation théorique entre la viscosité et la température du bain de fusion (106) est dérivée à partir d'une analyse de la charge avant son entrée dans le four (100).

17. Un procédé selon l'une quelconque des revendications 11 à 15,
dans lequel une relation théorique entre la viscosité et la température du bain de fusion (106) est dérivée à partir d'une analyse du bain de fusion (106).

18. Un procédé selon la revendication 15,
dans lequel la vitesse théoriquement idéale de changement de la température du réfractaire est calculée à partir du taux d'usure attendu d'un revêtement réfractaire qui maintient une couche d'accrétion idéale sur sa surface interne.

19. Un procédé selon l'une quelconque des revendications 11 à 18,
dans lequel la hauteur du bain de fusion (106) à l'intérieur du four (100) est mesurée pendant la coulée à l'aide d'une lance refroidie par air grâce à quoi la vitesse de changement de la hauteur du bain de fusion (106) est utilisée afin de déterminer la vitesse d'écoulement de la coulée et déterminer ainsi la viscosité du bain de fusion.

20. Un ensemble selon la revendication 1,
comprenant en outre un pyromètre optique pour mesurer la température du réfractaire et/ou la température du bain de fusion.

21. Un ensemble selon la revendication 1,
comprenant en outre un viscosimètre à pente inclinée pour mesurer la viscosité du bain de fusion.

22. Un ensemble selon l'une quelconque des revendications 1 à 10, 20 ou 21, comprenant en outre un moyen de refroidissement forcé pour appliquer un refroidissement forcé au réfractaire afin de retarder davantage le taux d'usure de réfractaire.

23. Un ensemble selon la revendication 2,
dans lequel la température du réfractaire et la vitesse d'écoulement de la coulée sont périodiquement surveillées pour fournir des températures de point de consigne optimal calculées périodiquement qui sont ensuite comparées à des températures de bain de fusion mesurées périodiquement.

24. Un procédé selon la revendication 11,
dans lequel la température du réfractaire, et/ou la température du bain de fusion, est mesurée à l'aide d'un pyromètre optique.

25. Un procédé selon la revendication 11,
dans lequel la viscosité du bain de fusion est mesurée à l'aide d'un viscosimètre à pente inclinée.

26. Un procédé selon l'une quelconque des revendications 11 à 21,
dans lequel un refroidissement forcé est appliqué au réfractaire afin de retarder davantage le taux d'usure de réfractaire.

27. Un procédé selon la revendication 12,
dans lequel la température du réfractaire et la vitesse d'écoulement de la coulée sont périodiquement surveillées pour fournir des températures de point de consigne optimal calculées périodiquement qui sont ensuite comparées à des températures de bain de fusion mesurées périodiquement.
